# EUROPEAN PATENT APPLICATION

(11) **EP 2 584 332 A1**
(43) Date of publication of application: **24.04.2013**
(21) Application number: 11185805.6
(22) Date of filing: 19.10.2011
(51) Int. Cl.: G01L 9/00

(54) **Pressure sensor**

(71) Applicant: Baumer Bourdon Haenni SAS, 41103 Vendôme (FR)
(72) Inventor: Pons, Philippe, 41290 Epiais (FR); Baudet, Pascal, 94140 Alfortville (FR)
(74) Representative: Strauss, Steffen

(57) **Abstract**

A capacitive pressure sensor for measuring a pressure difference between two media, which is not sensitive to moisture is provided. The pressure sensor (1) for measuring the pressure difference between a first medium (3) and a second medium (5), said pressure sensor (1) comprises
a capacitive pressure sensor (7) and
a second pressure sensor (9). The capacitive pressure sensor (7) having a cavity (70) hermetically sealed by a membrane (72) at a first access region (31) for action of the first medium (3) onto the capacitive pressure sensor (7), the capacitive pressure sensor (7) having a first electrode (74), and a second electrode (75), with the first electrode (74) being arranged at or forming a part of the membrane (72) and the second electrode (75) being at a distance to the first electrode (74) so that a deformation of the membrane (72) changes the distance between the first and the second electrode (74, 75), the change in distance causing a change of the capacitance of a capacitor formed by the first and second electrodes (74, 75), the cavity (70) being evacuated so that the capacitive sensor (7) forms an absolute pressure sensor for measuring the absolute pressure of the first medium (3), and the second pressure sensor (9) also being designed as an absolute pressure sensor and being arranged at a second access region (51) for action of the second medium (5) onto the second pressure sensor (9).

## Description

The invention relates to pressure sensors in general. In particular, the invention concerns capacitive pressure sensors.

Capacitive pressure sensors are highly sensitive sensors having a wide metering range. In general, this type of pressure sensor measures a pressure difference between two fluids, typically the pressure difference between a fluid and the atmospheric pressure. A capacitive sensor typically comprises a membrane which is elastically deformed by the pressure difference acting thereupon. One ore more electrodes connected to or being part of the membrane together with one or more fixed electrodes form a capacitor having a capacity dependent from the deformation of the membrane. Thus, the pressure difference is measured as a function of the capacitance.

Accordingly, it is requisite for hitherto used capacitive pressure sensors that both fluids between which the pressure difference is to be measured act on the membrane.

However, the capacity of a capacitive pressure sensor not only depends from the area and mutual distance of the electrodes but also strongly on the dielectric constant of the medium between the electrodes. In particular, the capacity is dependent on the humidity of the air in the sensor. The capacity can change even drastically, when the membrane of the sensor contacts a cold fluid. In this case, the membrane can cool down below the dew point. Then, water will condense on the membrane and its electrode.

There are several measures known in the art which attempt to avoid moisture-induced changes of the capacitance. For example, EP 1061351 A1 discloses a relative pressure sensor having a diaphragm with a first electrode applied to its surface. A hole is provided in a base body for guiding reference air from a first surface to an opposing second surface. The first surface is polished and a second electrode is applied to it. The base body and diaphragm are soldered or brazed together at the edge, with spacers forming a chamber. The chamber is covered from the inside with a thin layer of hydrophobic material which is brought in through the hole after the soldering or brazing. A similar sensor with a hydrophobic cladding is known from JP 2001 021430 A.

However, it is clear that these measures as described above cannot completely avoid moisture related effects on the characteristic of the sensor. It is therefore an object of the invention to provide a capacitive pressure sensor, in particular a relative pressure sensor for measuring a pressure difference between two media, which is not sensitive to moisture. This object is solved by the subject matter of the independent claims. The dependent claims define advantageous refinements and embodiments of the invention. Accordingly, a pressure sensor for measuring the pressure difference between a first medium and a second medium is provided, which comprises a capacitive pressure sensor and a second pressure sensor.

The capacitive pressure sensor has a cavity which is hermetically sealed by a membrane at a first access region for access or action of the first medium onto the capacitive pressure sensor of the first medium.

This capacitive pressure sensor further has a first electrode and a second electrode. The first electrode is arranged at or forms a part of the membrane.

The second electrode is arranged at a distance to the first electrode so that a deformation of the membrane changes the distance between the first and the second electrode. The change in distance then causes a change of the capacitance of the capacitor formed by the first and second electrodes.

The cavity is evacuated so that the capacitive sensor is an absolute pressure sensor for measuring the absolute pressure of the first medium.

The second pressure sensor is also designed as an absolute pressure sensor and is arranged at a second access region for access of the second medium to the second pressure sensor, respectively, for action of the second medium onto the second pressure sensor.

Thus, a relative pressure measurement is achieved by two absolute sensors. The relative pressure can be easily obtained by comparison of the pressure values obtained by from the capacitive pressure sensor and the second pressure sensor. As the capacitive sensor is hermetically sealed and evacuated, moisture cannot penetrate the cavity.

Preferably, the relative pressure is directly calculated by the pressure sensor. For this purpose, a data processing device of the pressure sensor is set up to calculate the pressure difference between the first medium and the second medium by subtracting the pressure value measured by the capacitive pressure sensor from the pressure value measured by the second pressure sensor.

Furthermore, the material of the membrane can be chosen so as to have a high corrosion resistance to aggressive media. According to a preferred refinement of the invention, therefore, the capacitive pressure sensor comprises a ceramic membrane. As ceramics have a high Young's modulus, however, the deformation is quite small for a given pressure, requiring a very sensitive measurement. Accordingly, as the inventive pressure measurement eliminates any moisture-induced effects, this sensitive measurement of small changes in capacity is not influenced by air humidity any more. The sensor according to the invention is therefore best suited to measure the pressure difference of a first medium to ambient air as the second medium.

To protect the second pressure sensor from moisture, the second pressure sensor is sealed against the second medium by a deformable seal according to a further refinement of the invention. A preferred substance for sealing is a silicon gel. This gel is highly hydrophobic. Further a silicon gel provides a good sealing at low Shore-hardness so that the measured pressure values are not substantially altered by elastic deformation of the seal.

It would be possible to use a further capacitive pressure sensor as the second sensor. However, as this sensor is intended to measure the ambient air pressure whithout having contact to particular aggressive media, a simple pressure sensor can be used. Particularly suited in this regard are piezoresistive pressure sensors.

Further, according to one embodiment, the pressure sensor comprises a circuit board having circuitry thereon for measuring sensor signals of the capacitive pressure sensor and the second pressure sensor. Then, the second pressure sensor may be directly mounted onto the circuit board. In particular, the second pressure sensor may be soldered onto the circuit board. Further, the circuitry may advantageously also comprise the data-processing device for calculating the relative pressure from the absolute pressure values obtained from the capacitive sensor and the second pressure sensor.

Further, the circuit board may advantageously be encapsulated by a sealing compound. This way, the circuitry is protected from moisture as well as the capacitive sensor. The pressure sensitive region of the second sensor then may be spared by the sealing compound to allow for an undisturbed measurement.

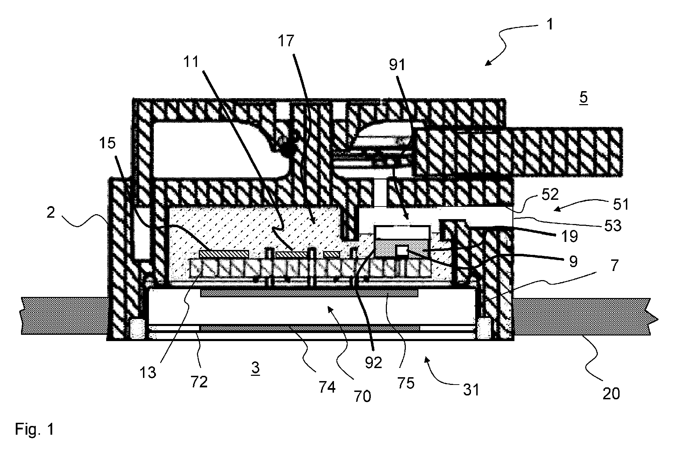

The invention is described in the following in more detail on the basis of an exemplary embodiment and with reference to the accompanying figure.

The figure shows a cross-sectional view of a pressure sensor 1 according to the invention.

The pressure sensor 1 comprises a housing 2 which accommodates the capacitive pressure sensor 7 and the second pressure sensor 9. The housing 2 is sealingly mounted in a partition wall 20 which separates a first medium 3 from a second medium 5. For example, the partition wall 20 may be the wall of a container or conduit for a fluid medium having a pressure which is to be monitored or controlled by means of the pressure sensor 1.

The capacitive pressure sensor has a cavity 70 which is encapsulated by a deformable membrane 72 and is evacuated so that cavity 70 is moisture free. The side of the pressure sensor 1 with the membrane 72 forms an access region 31 for action of said first medium 3 onto the capacitive pressure sensor 7, i.e. for exerting a pressure onto the capacitive pressure sensor 7. The membrane 72 is preferably made of ceramic material such as an aluminium-oxide. This material is substantially inert with respect to media 3 that are chemically aggressive. For example, the medium 3 may contain oxidising substances such as peroxides, axids or lyes.

A first electrode 74 is arranged on the membrane 72. At a distance to and face to face with the first electrode 74, a second electrode 75 is arranged at the wall of the cavity 70. Accordingly, a deformation of the membrane 72 due to the pressure exerted by the first medium 3 changes the distance between the electrodes 74, 75 and hence a change of the capacitance of the capacitor formed by the electrodes 74, 75.

As the cavity 70 is evacuated, pressure sensor 7 works as an absolute sensor which measures the absolute pressure value (i.e. in the depicted example the absolute pressure of medium 3) acting upon the membrane 72.

The pressure sensor 1 further comprises a circuit board 13 with circuitry 15 for driving the pressure sensors 7, 9 and to read out and process the measurements of the capacitive pressure sensor 7 and the second pressure sensor 9. The second pressure sensor 9 is soldered to the circuit board 13 so as to both fix the sensor and establish the electrical connections to the circuitry 15.
The circuitry 15 further comprises a data processing device 11 which calculates the pressure difference between the media 3 and 5 by subtracting the pressure value from second pressure sensor 9 from the pressure value measured by the capacitive pressure sensor 7.

A conduit 52 connects the second pressure sensor 9 inside of housing 2 to an opening 53 thereof, thereby forming a second access region for access of the second medium 5 to the second pressure sensor 9.

Sensor 9 also has an evacuated cavity so that this sensor measures the absolute pressure of medium 5, being the ambient air. Thus, Sensor 9 measures the ambient air pressure. Accordingly, in difference to capacitive pressure sensor 7, this sensor is not subjected to aggressive fluids. Therefore, a more simple pressure sensor such as in particular a piezoresistive pressure sensor may be employed in this case. Typical pieoresistive pressure sensors are also commonly referred to as "silicon sensors". Generally, these sensors have a silicon membrane with piezoresistors as strain elements deposited thereon. Similar to the capacitive pressure sensor 7, the membrane encapsulates an evacuated cavity so that the second pressure sensor measures the absolute pressure of medium 5, i.e. the absolute air pressure. Accordingly, in the depicted example, data processing device 11 calculates the pressure of medium 3 relative to the ambient air pressure.

Generally, without restriction to the depicted exemplary embodiment, the metering ranges of the sensors 7 and 9 may be different. In particular, if the pressure sensor according to the invention is used as a relative sensor to measure the pressure of medium 3 relative to the ambient air pressure, the metering range of second sensor 9 may be considerably smaller than that of capacitive sensor 7. A smaller metering range allows using a low-cost sensor as second pressure sensor 9 without reducing the overall accuracy considerably. Thus, according to a refinement of the invention and without restriction to the specific exemplary embodiments shown in the figure, the metering range of the capacitive pressure sensor 1 is larger than that of second pressure sensor 9.

According to a further refinement of the invention, not only the capacitive pressure sensor 7 but also the circuitry 15 is humidity protected. For this purpose, the circuit board 13 is encapsulated by a sealing compound 17. The sealing compound 17 may be silicone or a suitable resin such as an epoxy- or polyester resin.

As can be seen from the drawing, the pressure sensitive region 91 of second pressure sensor 9 projects from the sealing compound 17 so that the pressure sensitive region 91 is spared from the sealing compound 17. This way, the second medium 5 can exert pressure onto second pressure sensor 9 without being blocked or hindered by the sealing compound 17.

On the other hand, it is advantageous also to protect the second sensor 9 from humidity. For this purpose, the second pressure sensor 9 is sealed against the second medium 5 by a deformable seal 19. In particular, this seal may a silicon gel casted into a housing 92 of second sensor 9. Another possibility of a deformable seal 19 is an elastomeric membrane inserted into the housing 92.

### List of reference signs:

- 1: pressure sensor
- 2: housing
- 3: first medium
- 5: second medium
- 7: capacitive pressure sensor
- 9: second pressure sensor
- 11: data processing device
- 13: circuit board
- 15: circuitry
- 17: sealing compound
- 19: deformable seal
- 20: partition wall
- 31: first access region
- 51: second access region
- 52: conduit
- 53: opening of 52 in housing 2
- 70: cavity of capacitive pressure sensor 7
- 72: membrane of capacitive pressure sensor 7
- 74: first electrode
- 75: second electrode
- 91: pressure sensitive region of pressure sensor 9
- 92: housing of second sensor 9

## Claims

1. A pressure sensor (1) for measuring the pressure difference between a first medium (3) and a second medium (5), said pressure sensor (1) comprising
a capacitive pressure sensor (7) and
a second pressure sensor (9),
said capacitive pressure sensor (7) having a cavity (70)hermetically sealed by a membrane (72) at a first access region (31) for action of said first medium (3) onto said capacitive pressure sensor (7), said capacitive pressure sensor (7) having a first electrode (74), and a second electrode (75), with the first electrode (74) being arranged at or forming a part of said membrane (72) and said second electrode (75) being at a distance to said first electrode (74) so that a deformation of said membrane (72) changes the distance between said first and said second electrode (74, 75), the change in distance causing a change of the capacitance of a capacitor formed by said first and second electrodes (74, 75),
said cavity (70) being evacuated so that said capacitive sensor (7) forms an absolute pressure sensor for measuring the absolute pressure of said first medium (3), and
said second pressure sensor (9) also being designed as an absolute pressure sensor and being arranged at a second access region (51) for action of said second medium (5) onto said second pressure sensor (9).

2. Pressure sensor (1) according to the preceding claim, further comprising a data processing device (11) which calculates the pressure difference between said first medium (3) and said second medium (5) by subtracting the pressure value measured by the capacitive pressure sensor (7) from the pressure value measured by said second pressure sensor (9).

3. Pressure sensor (1) according to one of the preceding claims, **characterized in that** said second pressure sensor (9) is sealed against said second medium by a deformable seal (19), preferably a silicon gel.

4. Pressure sensor (1) according to one of the preceding claims, **characterized in that** said second sensor (2) is a piezoresistive pressure sensor.

5. Pressure sensor (1) according to one of the preceding claims, comprising a circuit board (13) having circuitry (15) thereon for measuring sensor signals of said capacitive pressure sensor (7) and said second pressure sensor (9), said second pressure sensor (9) being mounted onto said circuit board (13).

6. Pressure sensor (1) according to the preceding claim, **characterized in that** said circuit board (13) is encapsulated by a sealing compound (17).

7. Pressure sensor (1) according to the preceding claim, **characterized in that** said second pressure sensor (9) has a pressure sensitive region (91) which is spared by said sealing compound (17).

8. Pressure sensor (1) according to one of the preceding claims, **characterized in that** said capacitive pressure sensor (7) comprises a ceramic membrane 72).

9. Use of a pressure sensor (1) according to one of the preceding claims to measure the pressure difference of a first medium (3) to ambient air.
